(19) **Europäisches Patentamt / European Patent Office / Office européen des brevets**

(11) **EP 4 641 421 A1**

(12) **EUROPEAN PATENT APPLICATION**

(43) Date of publication:
29.10.2025 Bulletin 2025/44

(21) Application number: 24222236.2

(22) Date of filing: 20.12.2024

(51) International Patent Classification (IPC):
*G06F 21/62* (2013.01)  *G06Q 30/018* (2023.01)
*G06Q 50/26* (2024.01)

(52) Cooperative Patent Classification (CPC):
G06F 21/6227; G06F 21/6245; G06Q 10/103;
G06Q 30/018; G06Q 50/06; G06Q 50/26

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.04.2024 CN 202410502674

(71) Applicant: Ecological and Environmental Low-Carbon
Development Center of Zhejiang Province
Hangzhou, Zhejiang 310012 (CN)

(72) Inventors:
• REN, Yanhong
Hangzhou (CN)
• YANG, Wenmin
Hangzhou (CN)
• YANG, Yongjin
Hangzhou (CN)
• LU, Jianping
Hangzhou (CN)
• ZHANG, Wei
Hangzhou (CN)
• LIU, Fengmei
Hangzhou (CN)
• NI, Weiqi
Hangzhou (CN)

(74) Representative: van Breda, Jacobus
Octrooibureau Los & Stigter B.V.
P.O. Box 20052
1000 HB Amsterdam (NL)

(54) **METHOD AND SYSTEM FOR TRACING AND MANAGING CARBON FOOTPRINT OF SUPPLY CHAIN, DEVICE AND MEDIUM**

(57) A method and a system for tracing and managing a carbon footprint of a supply chain, a device, and a medium are provided, relating to the technical field of carbon emissions. The system includes: a data source access and management module, a carbon footprint calculation module, a blockchain storage module, a reporting and authentication module, and a data query and tracing module. The data source access and management module is configured to access and manage data sources of the supply chain and obtain activity data of the data sources. The carbon footprint calculation module is configured to, in response to a carbon footprint calculation request from any one of the data sources, obtain a carbon footprint calculation result based on corresponding target activity data and a target emission factor. The blockchain storage module is configured to perform blockchain storage based on the determined data protection level and data authority information in performing data storage. The reporting and authentication module is configured to obtain and review an electronic report based on the carbon footprint calculation result, and upload a certificate to the preset blockchain through the third-party institution after approving the electronic report. The data query and tracing module is configured to query data based on the corresponding processing result and the preset blockchain in response to a data query request. Thereby, the reliability of the credibility of tracing carbon footprints is improved.

**FIG. 1**

## Description

## FIELD

The present disclosure relates to the technical field of carbon emissions, and in particular to a method and a system for tracing and managing a carbon footprint of a supply chain, a device, and a medium.

## BACKGROUND

A carbon footprint of a product is a quantification of a greenhouse gas impact caused by the product or service based on a full-life cycle assessment algorithm. Therefore, determining a carbon footprint of a product is a key step in reducing carbon emissions in product production and supply chains. Based on a reliable carbon footprint result, companies can identify main greenhouse gas emission processes in a product lifecycle, and upstream and downstream companies may choose suitable low-carbon products, thereby reducing carbon emissions in the supply chain. Calculating a carbon footprint of a product usually involves a large amount of data related to production of a target product, including data of materials, energy, and waste. The data is huge and complex, and is often stored discretely in ledgers of different departments and companies. As a result, it is often difficult for data verification parties and objects (having data authority) that disclose carbon footprint data to trace the original data used for calculating the carbon footprint, and modifications or changes to the data are imperceptible. That is, it is difficult to ensure traceability and immutability of the data, resulting in low credibility of carbon footprint results.

## SUMMARY

In view of this, a method and a system for tracing and managing a carbon footprint of a supply chain, a device, and a medium are provided according to the present disclosure, effectively ensuring traceability and immutability of data, providing high-quality and transparent product carbon footprint data for upstream and downstream of a supply chain, linking the carbon footprints of the upstream and downstream of the supply chain together while ensuring data privacy, thereby improving the credibility of tracing carbon footprints. The following solutions are provided.

In a first aspect, a system for tracing and managing a carbon footprint of a supply chain is provided according to the present disclosure. The system includes: a data source access and management module, a carbon footprint calculation module, a blockchain storage module, a reporting and authentication module, and a data query and tracing module. The data source access and management module is configured to access and manage multiple data sources corresponding to the supply chain and obtain activity data corresponding to the data sources, where the activity data includes online data and offline data. The carbon footprint calculation module is configured to, in response to a carbon footprint calculation request from a data source of the multiple data sources, perform a life cycle impact assessment based on obtained target activity data and an obtained target emission factor corresponding to the data source to obtain a carbon footprint calculation result corresponding to the data source. The blockchain storage module is configured to perform blockchain storage based on a determined data protection level and determined data authority information in performing data storage. The reporting and authentication module is configured to obtain a carbon footprint electronic report based on the target activity data, the target emission factor and the carbon footprint calculation result, and submit the carbon footprint electronic report to a third-party institution for review, where the third-party institution uploads a carbon footprint certificate to a preset blockchain after approving the carbon footprint electronic report. The data query and tracing module is configured to perform processing in response to a received a data query request, and perform query based on a processing result and the preset blockchain to obtain a query result.

In an embodiment, the data source access and management module includes: an online data obtaining unit and an offline data obtaining unit. The online data obtaining unit is configured to obtain online data corresponding to the data source by using a configured preset data collection device, where the online data includes an electricity usage change, a gas usage, a water usage change, and new energy generation data. The offline data obtaining unit is configured to obtain offline data from offline data sources corresponding to the multiple data sources, where the offline data sources include a bill of materials, a company resource planning system, an accounting system, a workshop production statistics table, and a warehouse-in and warehouse-out ledger.

In an embodiment, the carbon footprint calculation module includes: a request analysis unit, a target activity data obtaining unit and a target emission factor obtaining unit. The request analysis unit is configured to analysis the carbon footprint calculation request to obtain an analysis result, where the analysis result includes a target data request item, a target data time period, and company identification information. The target activity data obtaining unit is configured to determine, based on the target data request item and the target data time period, whether a data model for storing the activity data exists in the preset blockchain in a corresponding time period, and obtain the target activity data based on the data model in a case that the data model for storing the activity data exists in the preset blockchain in the corresponding time period. The target emission factor obtaining unit is configured to determine, based on the company identification information, whether a historical carbon footprint calculation result of a target data source or a upstream data source or a downstream data source of the supply chain exists in the preset blockchain, determine whether the target data source has a data usage authority to obtain a first authority verification result in a case that the historical carbon footprint calculation result exists, and obtain the target emission factor based on the obtained first authority verification result, where the target data source is the data source that initiates the carbon footprint calculation request.

In an embodiment, the target emission factor obtaining unit includes: a first emission factor obtaining sub-unit and a second emission factor obtaining sub-unit. The first emission factor obtaining sub-unit is configured to obtain the target emission factor based on the historical carbon footprint calculation result in a case that it is determined that the historical carbon footprint calculation result exists and the first authority verification result indicates that the target data source has the data usage authority. The second emission factor obtaining sub-unit is configured to perform retrieval matching based on a preset background database and obtain the target emission factor based on a retrieval matching result in a case that it is determined that the historical carbon footprint calculation result does not exist or the first authority verification result indicates that the target data source does not have the data usage authority.

In an embodiment, the target activity data obtaining unit further includes: a request modification sub-unit or a data supplementation sub-unit. The request modification sub-unit is configured to return an error information response to the data source in a case that it is determined that no data model for storing the activity data exists in the preset blockchain in the corresponding time period, where the data source modifies the carbon footprint calculation request based on the error information response. The data supplementation sub-unit is configured to trigger an activity data supplement operation in a case that it is determined that no data model for storing the activity data exists in the preset blockchain in the corresponding time period.

In an embodiment, the reporting and authentication module includes a third-party review unit. The third-party review unit is configured to submit the target activity data, the target emission factor, and the carbon footprint electronic report to the third-party institution, where the third-party institution, together with the data query and tracing module, performs data source tracing and data change history tracing to perform the review.

In an embodiment, the data query and tracing module includes: a request classification unit, an authority verification unit, and a data query unit. The request classification unit is configured to classify the data query request to obtain a classification result. The authority verification unit is configured to determine whether the request initiator of the data query request has a corresponding data access authority based on the classification result to obtain a second authority verification result. The data query unit is configured to perform query based on the classification result and the preset blockchain to obtain the query result in a case that the second authority verification result indicates that the request initiator of the data query request has the corresponding data access authority.

In a second aspect, a method for tracing and managing a carbon footprint of a supply chain is provided according to the present disclosure. The method includes: accessing and managing multiple data sources corresponding to the supply chain, and obtaining activity data corresponding to the data sources, where the activity data includes online data and offline data; performing a life cycle impact assessment, in response to a carbon footprint calculation request from a data source of the multiple data sources, based on obtained target activity data and an obtained target emission factor corresponding to the data source to obtain a carbon footprint calculation result corresponding to the data source; performing blockchain storage based on a determined data protection level and determined data authority information in performing data storage; obtaining a carbon footprint electronic report based on the target activity data, the target emission factor and the carbon footprint calculation result, and submitting the carbon footprint electronic report to a third-party institution for review, where the third-party institution uploads a carbon footprint certificate to a preset blockchain after approving the carbon footprint electronic report; and performing processing in response to a received a data query request, and performing query based on a processing result and the preset blockchain to obtain a query result.

In a third aspect, an electronic device is provided according to the present disclosure. The electronic device includes: a memory and a processor. The memory stores a computer program. The processor is configured to execute the computer program to perform the method for tracing and managing a carbon footprint of a supply chain described above.

In a fourth aspect, a computer-readable storage medium is provided according to the present disclosure. The computer-readable storage medium stores a computer program. The computer program, when executed by a processor, causes the processor to perform the method for tracing and managing a carbon footprint of a supply chain described above.

It can be seen that in the present disclosure, the data source access and management module is configured to access and manage multiple data sources corresponding to the supply chain and obtain activity data corresponding to the data sources, where the activity data includes online data and offline data; the carbon footprint calculation module is configured to, in response to a carbon footprint calculation request from a data source of the multiple data sources, perform a life cycle impact assessment based on obtained target activity data and an obtained target emission factor corresponding to the data source to obtain a carbon footprint calculation result corresponding to the data source; the blockchain storage module is configured to perform blockchain storage based on a determined data protection level and determined data authority information in performing data storage; the reporting and authentication module is configured to obtain a carbon footprint electronic report based on the target activity data, the target emission factor and the carbon footprint calculation result, and submit the carbon footprint electronic report to a third-party institution for review, where the third-party institution uploads a carbon footprint certificate to a preset blockchain after approving the carbon footprint electronic report; and the data query and tracing module is configured to perform processing in response to a received a data query request, and perform query based on a processing result and the preset blockchain to obtain a query result. That is, in the process of calculating and managing the carbon footprint of the supply chain according to the present disclosure, related data is stored in the preset blockchain and is classified into levels while being stored, so as to verify query requests based on levels in subsequent data tracing. In this way, the traceability and immutability of the data can be effectively ensured, high-quality and transparent product carbon footprint data is provided for upstream and downstream of the supply chain, and the carbon footprints of the upstream and downstream of the supply chain are linked together while ensuring data privacy, thereby improving the credibility of tracing carbon footprints.

## BRIEF DESCRIPTION OF THE DRAWINGS

In order to more clearly illustrate technical solutions in embodiments of the present disclosure or in the conventional technology, the drawings to be used in the description of the embodiments or the conventional technology are briefly described below. Apparently, the drawings in the following description show only embodiments of the present disclosure, and other drawings may be obtained by those skilled in the art from the drawings without any creative work.

FIG. 1 is a schematic structural diagram of a system for tracing and managing a carbon footprint of a supply chain according to the present disclosure;
FIG. 2 is a schematic diagram showing a structure of a system for tracing and managing a carbon footprint of a supply chain according to the present disclosure;
FIG. 3 is a schematic diagram of a data structure in a data model according to the present disclosure;
FIG. 4 is a flowchart of calculating a carbon footprint according to the present disclosure;
FIG. 5 is a schematic structural diagram of a system for tracing and managing a carbon footprint of a supply chain according to the present disclosure;
FIG. 6 is a flowchart of a method for tracing and managing a carbon footprint of a supply chain according to the present disclosure; and
FIG. 7 is a schematic structural diagram of an electronic device according to the present disclosure.

## DETAILED DESCRIPTION

The technical solutions according to the embodiments of the present disclosure will be described clearly and completely as follows in conjunction with the drawings in the embodiments of the present disclosure. It is apparent that the described embodiments are only some of the embodiments according to the present disclosure, rather than all the embodiments. All other embodiments obtained by those skilled in the art based on the embodiments of the present disclosure without any creative work fall within the protection scope of the present disclosure.

Presently, the results and related data involved in calculating carbon footprints of products are generally stored in centralized servers of different entities. The entities controlling the data have absolute control over the data, and it is difficult for external entities to perceive change information in the data. Moreover, since the data is managed by a single system, the data may be lost in a case that the system is attacked or damaged or malfunctioning, resulting in difficulty to trace the data subsequently. It is difficult to ensure the traceability and immutability of the data, resulting in low credibility of the carbon footprint results. Therefore, a method for tracing and managing a carbon footprint of a supply chain is provided according to the present disclosure, effectively improving the credibility of carbon footprint tracing.

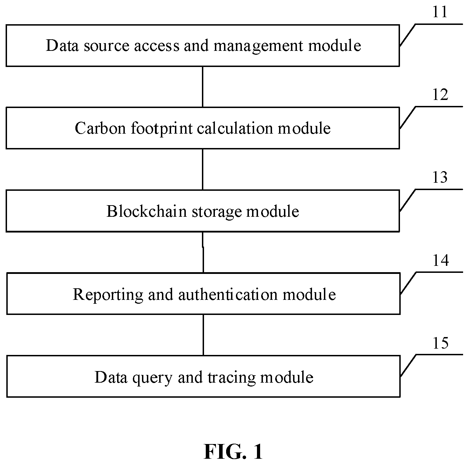

As shown in FIG. 1, a system for tracing and managing a carbon footprint of a supply chain is provided according to an embodiment of the present disclosure. The system includes: a data source access and management module 11, a carbon footprint calculation module 12, a blockchain storage module 13, a reporting and authentication module 14, and a data query and tracing module 15.

The data source access and management module 11 is configured to access and manage multiple data sources corresponding to the supply chain, and obtain activity data corresponding to the data sources. The activity data includes online data and offline data.

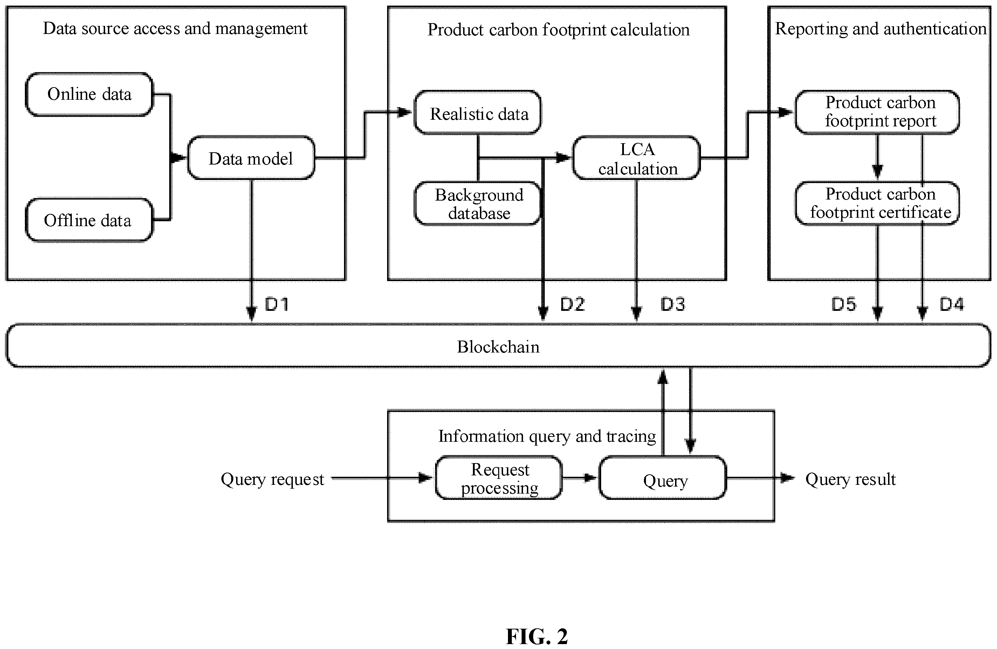

As shown in FIG. 2, in the embodiment, the data source access and management module 11 includes: an online data obtaining unit and an offline data obtaining unit. The online data obtaining unit is configured to obtain online data corresponding to the data source by using a configured preset data collection device, where the online data includes an electricity usage change, a gas usage, a water usage change, and new energy generation data. The offline data obtaining unit is configured to obtain offline data from offline data sources corresponding to the multiple data sources, where the offline data sources include a bill of materials, a company resource planning system, an accounting system, a workshop production statistics table, and a warehouse-in and warehouse-out ledger. It should be understood that the data sources are generally related to multiple companies upstream and downstream of the supply chain. That is, the online data includes but is not limited to electricity usage changes, gas usages, water usage changes, and new energy generation data of production companies; and the offline data source includes but is not limited to material usages, transportation information, product outputs, and waste generations of companies.

It should be understood that, for the online data, an Internet of Things (IoT) data collection device is arranged, that is, the preset data collection device (such as an intelligent electricity meter for collecting and metering electricity consumption, an intelligent water meter for collecting and metering water consumption, and a photovoltaic meter for collecting power generation of a photovoltaic power generation device) collects source data from production company, and stores source data collected every day as a data model unit in a blockchain (step D1 in FIG. 2). Carbon emission activity data Di corresponding to each of data models is calculated by using the following equation:

$$D_i = D_{ti, \text{ start}} - D_{ti, \text{ end}}$$

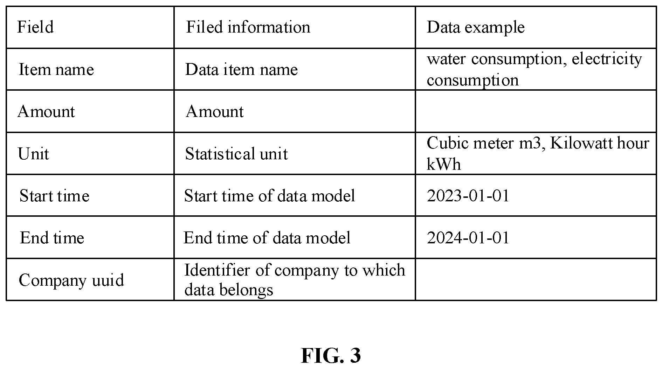

where $D_{ti, star}$ represents source data recorded by an i-th data model at start time, and $D_{ti,end}$ represents source data recorded by the i-th data model at end time. Offline upload data, that is, the offline data, is obtained from a bill of materials (BOM), a company resource planning (ERP) system, an accounting system, a workshop production statistics table, a warehouse-in and warehouse-out ledger, and the like of a company. The offline data is modeled based on time periods and stored in the blockchain (D1). That is, for both the online data and the offline data in the embodiment, data models are established for storing the data based on corresponding time periods, and then are stored in the blockchain. The data structure of the data model may be referred to FIG. 3.

The carbon footprint calculation module 12 is configured to, in response to a carbon footprint calculation request from a data source of the multiple data sources, perform a life cycle impact assessment based on obtained target activity data and an obtained target emission factor corresponding to the data source to obtain a carbon footprint calculation result corresponding to the data source.

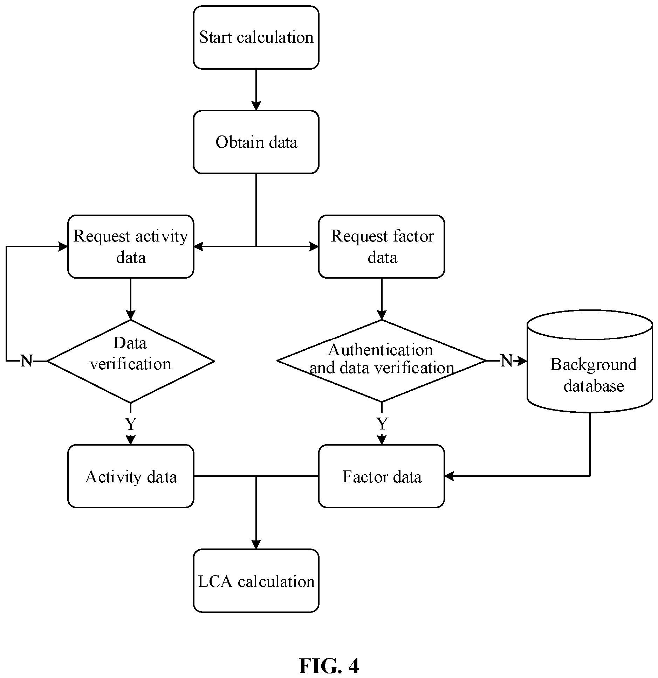

As shown in FIG. 4, in the embodiment, the carbon footprint calculation module 12 includes: a request analysis unit, a target activity data obtaining unit and a target emission factor obtaining unit. The request analysis unit is configured to analysis the carbon footprint calculation request to obtain an analysis result, where the analysis result includes a target data request item, a target data time period, and company identification information. The target activity data obtaining unit is configured to determine, based on the target data request item and the target data time period, whether a data model for storing the activity data exists in the preset blockchain in a corresponding time period, and obtain the target activity data based on the data model in a case that the data model for storing the activity data exists in the preset blockchain in the corresponding time period. The target emission factor obtaining unit is configured to determine, based on the company identification information, whether a historical carbon footprint calculation result of a target data source or a upstream data source or a downstream data source of the supply chain exists in the preset blockchain, determine whether the target data source has a data usage authority to obtain a first authority verification result in a case that the historical carbon footprint calculation result exists, and obtain the target emission factor based on the obtained first authority verification result, where the target data source is the data source that initiates the carbon footprint calculation request. That is, in calculating a product carbon footprint of a company in the supply chain, the required activity data is obtained from the data stored in a data source of the company (that is, the data stored in step D1 as shown in FIG. 2). The required emission factor may be obtained based on: (a) a carbon footprint data result that is obtained by performing a life cycle impact assessment (LCA) on the company or other upstream and downstream companies in the supply chain and is stored in the preset blockchain (that is, the historical data stored in step D3 shown in FIG. 2); or (b) an appropriate factor data obtained from a background database (such as Gabi and Ecoinvent) in a case of no source (a) data or no related data authority.

That is, it should be understood that in the embodiment, the target emission factor obtaining unit includes: a first emission factor obtaining sub-unit and a second emission factor obtaining sub-unit. The first emission factor obtaining sub-unit is configured to obtain the target emission factor based on the historical carbon footprint calculation result in a case that it is determined that the historical carbon footprint calculation result exists and the first authority verification result indicates that the target data source has the data usage authority. The second emission factor obtaining sub-unit is configured to perform retrieval matching based on a preset background database and obtain the target emission factor based on a retrieval matching result in a case that it is determined that the historical carbon footprint calculation result does not exist or the first authority verification result indicates that the target data source does not have the data usage authority.

In addition, in response to the carbon footprint calculation request from the company, the request is analyzed to determine the required target data request item and the target data time period ($T_{start} \rightarrow T_{end}$). Therefore, for the activity data, it is determined whether the required target data request item and the data model in the target data time period exist (where it is unnecessary to verify the data usage authority in a case of not involving hierarchical management of data within internal departments of the company, and it is required to verify the data usage authority in a case of involving hierarchical management of data within internal departments of the company). In a case that some data is missing, an error information response is returned, and it is required to modify a data request range or supplement corresponding data by using the offline data obtaining unit in the data source access and management module 11. In a case of passing the data verification, corresponding activity data may be obtained for LCA calculation. For a data item i, the activity data in a preset data collection time period is calculated by the following equation:

$$Amount_i = \sum_t Amount_{i,t}$$

In the above equation, $Amount_i$ represents target activity data corresponding to the i-th target data request item, and t represents the data collection time period corresponding to the i-th target data request item. That is, the target activity data obtaining unit further includes: a request modification sub-unit or a data supplementation sub-unit. The request modification sub-unit is configured to return an error information response to the data source in a case that it is determined that no data model for storing the activity data exists in the preset blockchain in the corresponding time period, so that the data source modifies the carbon footprint calculation request based on the error information response. The data supplementation sub-unit is configured to trigger an activity data supplement operation in a case that it is determined that no data model for storing the activity data exists in the preset blockchain in the corresponding time period.

For the target emission factor, it should be understood that in the embodiment, the received carbon footprint calculation request includes a company uuid field indicating the source of the data item. Based on the identifier of the company to which the data belongs, it is verified whether historical LCA calculation result data (that is, the historical carbon footprint calculation result) of the company exists, and it is verified whether the current company has the authority to use the result data. In a case of passing both the authority verification and the existence verification, the LCA result data of the target company in the supply chain may be obtained and used as factor data. In a case of not passing the authority verification or the existence verification, an emission factor having a highest matching degree is retrieved from the background database based on geography, time, production technology, and the like of a product production, and is used as the target emission factor.

After obtaining the target emission factor corresponding to each of the target data request items and the target activity data in the corresponding target data time period, the data items including activity data and emission factors is stored as inputs of the LCA calculation module in the blockchain (that is, the step D2 shown in FIG. 2), and LCA calculation is performed based on the following equation:

$$CF = \sum_i^n Amount_i * EF_i$$

In the above equation, CF represents a carbon footprint of a product, that is, a carbon footprint calculation result, n represents the total number of the target data request items, and the $EF_i$ represents a target emission factor corresponding to the i-th target data request item. The obtained CF data is stored as the carbon footprint result in the preset blockchain (that is, the step D 3 shown in FIG. 2).

The blockchain storage module 13 is configured to perform blockchain storage based on a determined data protection level and determined data authority information in performing data storage.

In the embodiment, as shown in FIG. 2, due to involving data storage, sharing and use of multiple parties, data level, data encryption and data authority control are considered in storing data (that is, in steps D1, D2, D3, D4 and D5 shown in FIG. 2). Based on the protection level and disclosure degree of data, the data is classified into the following three levels of data. (1) L1 company encrypted data, which is encrypted when stored in the preset blockchain. That is, only a ciphertext can be obtained during querying, and the original content is obtained by decrypting. The L1 company encrypted data is applicable to key raw material formulas and other data of a company. In principle, the total proportion of the privacy encrypted data in weight evaluation should not exceed 1% of all data items of the company, so as to ensure that most of the relevant data is transparent and traceable. Within a controllable range, the impact of the encrypted data on the carbon footprint result does not exceed 5%. (2) L2 supply chain shared data, which may be shared with authorized companies upstream and downstream of the supply chain and the third-party authentication institutions, such as the carbon footprint calculation result and most of the activity data that does not belong to the data type L1. After passing the authority verification, other companies or institutions may query or use this type of data. (3) L3 directly disclosed data, which may be disclosed to the public, such as the carbon footprint reports and the carbon footprint authentication certificates. The L3 directly disclosed data may be directly queried by the user registered on a query platform.

In the embodiment, in storing the data in the preset blockchain, in addition to the content of the data, the data level (L1 to L3) of the data and the object range that the data may be disclosed are stored. Thus, in verifying data authority for obtaining data, it is determined whether the data request is valid based on the request initiator and the data level. Therefore, the data authorization is graded, linking the carbon footprints of the upstream and downstream of the supply chain together while ensuring data privacy.

The reporting and authentication module 14 is configured to obtain a carbon footprint electronic report based on the target activity data, the target emission factor and the carbon footprint calculation result, and submit the carbon footprint electronic report to a third-party institution for review, so that the third-party institution uploads a carbon footprint certificate to a preset blockchain after approving the carbon footprint electronic report.

In the embodiment, the reporting and authentication module 14 includes a third-party review unit. The third-party review unit is configured to submit the target activity data, the target emission factor, and the carbon footprint electronic report to the third-party institution, so that the third-party institution, together with the data query and tracing module, performs data source tracing and data change history tracing to perform the review. That is, the reporting and authentication module 14 is configured for authentication by the third-party institution. Based on the input data (that is, the data stored in the preset blockchain in step D2 shown in FIG. 2) of the LCA calculation module and the corresponding carbon footprint calculation result (that is, the data stored in the preset blockchain in step D3 shown in FIG. 2), a carbon footprint electronic report is generated and uploaded to the preset blockchain (that is, the step D4 shown in FIG. 2). The third-party institution reviews the data source data, the LCA calculation input data, the carbon footprint calculation result, the carbon footprint electronic report and other related items. In the review process, the information query and tracing module M4 may query the source and the change history of the related data. After approval, the third-party institution uploads the carbon footprint certificate of the product to the preset blockchain (that is, the step D 5 shown in FIG. 2).

The data query and tracing module 15 is configured to perform processing in response to a received a data query request, and perform query based on a processing result and the preset blockchain to obtain a query result.

In the embodiment, the data query and tracing module 15 supports specific requests for blockchain data queries to support data review, data tracing, data disclosure and the like. The data query and tracing module 15 performs a request processing function and a query function. For the request processing function, the query requests are classified into a carbon footprint certificate query, a carbon footprint report query, a carbon footprint result query, an LCA input data query and a data source query, and the request type is determined. In processing the data request, the data authority level of the corresponding request initiator is verified, the query is performed after confirming that the request initiator has the data access authority, and then a result is returned to the request initiator.

It can be seen that in the embodiments of the present disclosure, the data source access and management module is configured to access and manage multiple data sources corresponding to the supply chain and obtain activity data corresponding to the data sources, where the activity data includes online data and offline data; the carbon footprint calculation module is configured to, in response to a carbon footprint calculation request from a data source of the multiple data sources, perform a life cycle impact assessment based on obtained target activity data and an obtained target emission factor corresponding to the data source to obtain a carbon footprint calculation result corresponding to the data source; the blockchain storage module is configured to perform blockchain storage based on a determined data protection level and determined data authority information in performing data storage; the reporting and authentication module is configured to obtain a carbon footprint electronic report based on the target activity data, the target emission factor and the carbon footprint calculation result, and submit the carbon footprint electronic report to a third-party institution for review, where the third-party institution uploads a carbon footprint certificate to a preset blockchain after approving the carbon footprint electronic report; and the data query and tracing module is configured to perform processing in response to a received a data query request, and perform query based on a processing result and the preset blockchain to obtain a query result. That is, in the process of calculating and managing the carbon footprint of the supply chain according to the present disclosure, related data is stored in the preset blockchain and is classified into levels while being stored, so as to verify query requests based on levels in subsequent data tracing. In this way, the traceability and immutability of the data can be effectively ensured, high-quality and transparent product carbon footprint data is provided for upstream and downstream of the supply chain, and the carbon footprints of the upstream and downstream of the supply chain are linked together while ensuring data privacy, thereby improving the credibility of tracing carbon footprints.

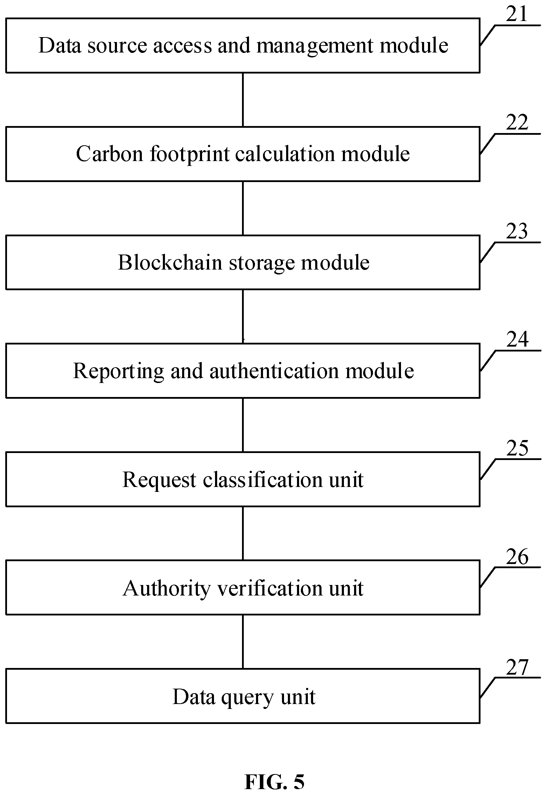

It can be seen from the above embodiment of the present disclosure that after receiving a data query request for tracing, reviewing, and the like, it is determined whether to perform a query by verifying the data authority of the request initiator. Hereinafter, the data query process is described in detail. As shown in FIG. 5, a system for tracing and managing a carbon footprint of a supply chain is provided according to an embodiment of the present disclosure. The system includes: a data source access and management module 21, a carbon footprint calculation module 22, a blockchain storage module 23, a reporting and authentication module 24, a request classification unit 25, an authority verification unit 26, and a data query unit 27.

The data source access and management module 21 is configured to access and manage multiple data sources corresponding to the supply chain and obtain activity data corresponding to the data sources. The activity data includes online data and offline data.

The carbon footprint calculation module 22 is configured to, in response to a carbon footprint calculation request from a data source of the multiple data sources, perform a life cycle impact assessment based on obtained target activity data and an obtained target emission factor corresponding to the data source to obtain a carbon footprint calculation result corresponding to the data source.

The blockchain storage module 23 is configured to perform blockchain storage based on a determined data protection level and determined data authority information in performing data storage.

The reporting and authentication module 24 is configured to obtain a carbon footprint electronic report based on the target activity data, the target emission factor and the carbon footprint calculation result, and submit the carbon footprint electronic report to a third-party institution for review, so that the third-party institution uploads a carbon footprint certificate to a preset blockchain after approving the carbon footprint electronic report.

The request classification unit 25 is configured to classify the data query request to obtain a classification result.

In the embodiment, the request type of the received data query request is analyzed to determine the type of the data requested to be queried and the level the data requested to be queried.

The authority verification unit 26 is configured to determine whether a request initiator of the data query request has a corresponding data access authority based on the classification result to obtain a second authority verification result.

In the embodiment, after the corresponding classification result is obtained, it is required to verifying whether the request initiator has a corresponding data access authority to ensure the privacy of the data and avoid malicious incidents such as data breaches, so that it is subsequently determined whether to perform the query operation based on the obtained second authority verification result.

The data query unit 27 is configured to perform query based on the classification result and the preset blockchain to obtain the query result in a case that the second authority verification result indicates that the request initiator of the data query request has the corresponding data access authority.

In the embodiment, it should be understood that the blockchain query is performed based on the classification result only in a case that the second authority verification result indicates that the request initiator has the corresponding data access authority. In a case that the second authority verification result indicates that the request initiator does not have the corresponding data access authority, the data query request is not responded to.

For the detailed processes of the modules 21 to 24, one may refer to the corresponding content described in the foregoing embodiments, which are not repeated herein.

It can be seen that in the embodiment of the present disclosure, data authority verification is performed on the request initiator before querying data, and it is determined whether the data request is valid based on the request initiator and the data level. In this way, the privacy and security of the data are improved, avoiding malicious incidents such as data breaches.

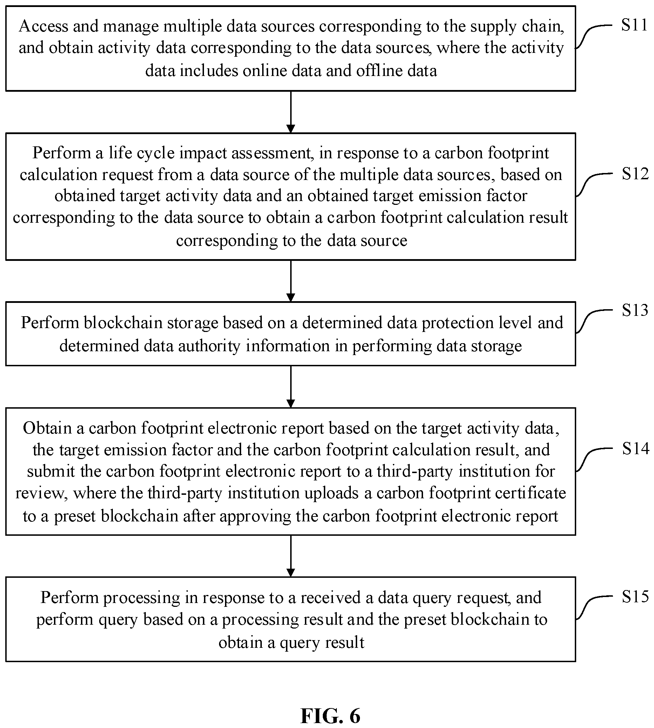

As shown in FIG. 6, a method for tracing and managing a carbon footprint of a supply chain is further provided according to an embodiment of the present disclosure. The method includes the following steps S11 to S15.

In step S11, multiple data sources corresponding to the supply chain are accessed and managed, and activity data corresponding to the data sources is obtained. The activity data includes online data and offline data.

In step S12, in response to a carbon footprint calculation request from a data source of the multiple data sources, a life cycle impact assessment is performed based on obtained target activity data and an obtained target emission factor corresponding to the data source to obtain a carbon footprint calculation result corresponding to the data source.

In step S13, blockchain storage is performed based on a determined data protection level and determined data authority information in performing data storage.

In step S14, a carbon footprint electronic report is obtained based on the target activity data, the target emission factor and the carbon footprint calculation result, and the carbon footprint electronic report is submitted to a third-party institution for review. The third-party institution uploads a carbon footprint certificate to a preset blockchain after approving the carbon footprint electronic report.

In step S15, processing is performed in response to a received a data query request, and query is performed based on a processing result and the preset blockchain to obtain a query result.

For detail operation processes of the above steps, one may refer to the descriptions of the above embodiments, which are not repeated herein.

It can be seen that in the process of calculating and managing the carbon footprint of the supply chain according to the present disclosure, related data is stored in the preset blockchain and is classified into levels while being stored, so as to verify query requests based on levels in subsequent data tracing. In this way, the traceability and immutability of the data can be effectively ensured, high-quality and transparent product carbon footprint data is provided for upstream and downstream of the supply chain, and the carbon footprints of the upstream and downstream of the supply chain are linked together while ensuring data privacy, thereby improving the credibility of tracing carbon footprints.

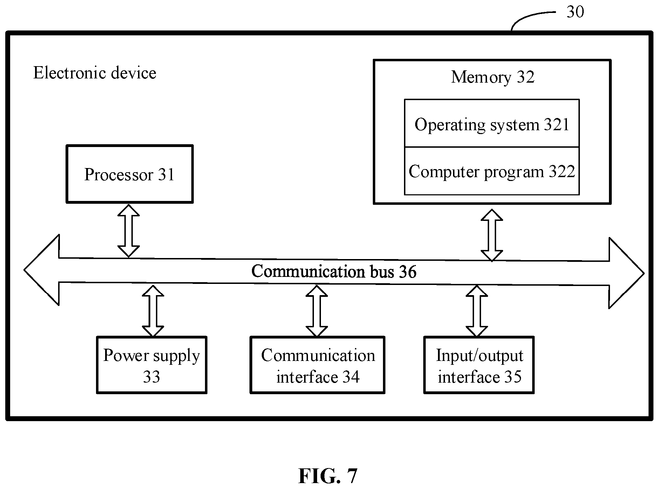

Further, an electronic device is provided according to an embodiment of the present disclosure. FIG. 7 is a schematic structural diagram of an electronic device 30 according to an exemplary embodiment, and the content shown in FIG. 7 should not be considered as any limitation on the usage scope of the present disclosure.

FIG. 7 is a schematic structural diagram of an electronic device 30 according to an embodiment of the present disclosure. The electronic device 30 may include: at least one processor 31, at least one memory 32, a power supply 33, a communication interface 34, an input/output interface 35, and a communication bus 36. The memory 32 is configured to store a computer program. The computer program is loaded and executed by the processor 31 to perform the method for tracing and managing a carbon footprint of a supply chain according to any one of the above embodiments. In addition, the electronic device 30 in the embodiment may be an electronic computer.

In the embodiment, the power supply 33 is configured to provide an operation voltage for hardware devices in the electronic device 30. The communication interface 34 provides a data transmission channel between the electronic device 30 and an external device based on a communication protocol applicable to the technical solutions of the present disclosure, which is not limited herein. The input/output interface 35 is configured to receive data from an external device or output data to the external device, and the specific interface type may be determined according to application requirements, which is not limited herein.

In addition, the memory 32, as a carrier for resource storage, may be a read-only memory, a random access memory, a magnetic disk, an optical disk, or the like. Resources stored on the memory 32 may include an operating system 321, a computer program 322, and the like, and the resources may be temporarily stored or permanently stored.

The operating system 321 is used to manage and control hardware devices and the computer program 322 in the electronic device 30. The operating system 321 may be Windows Server, Netware, Unix, Linux, and the like. In addition to the computer program executed by the electronic device 30 to perform the method for tracing and managing the carbon footprint of the supply chain according to any of the above embodiments, the computer program 322 may further include a computer program for performing other functions.

Furthermore, a computer-readable storage medium is provided according to an embodiment of the present disclosure. The computer-readable storage medium stores a computer program. The computer program, when executed by a processor, causes the processor to perform the method for tracing and managing a carbon footprint of a supply chain described above. Specific steps of the method may refer to the content disclosed in the above embodiments, and are not repeated herein.

The above embodiments are described in a progressive manner. Each of the embodiments is mainly focused on describing differences from other embodiments, and reference may be made among these embodiments with respect to the same or similar parts. Since device embodiments correspond to the method embodiments, the descriptions of the device embodiments are simple, and reference may be made to the relevant part of the method embodiments.

Those skilled in the art may further realize that the units and algorithm steps of each example described in conjunction with the embodiments disclosed herein can be implemented by electronic hardware, computer software, or a combination of both. In order to clearly illustrate the interchangeability of hardware and software, the modules and steps of each example have been described in general terms of functionality in the above description. Whether these functions are performed in hardware or software depends on the specific application and design constraints of the technical solution. Those skilled in the art may use different methods to implement the described functions for each specific application, but such implementation should not be regarded as exceeding the scope of the present disclosure.

Steps of the method or algorithm described in the embodiments disclosed herein may be directly implemented by hardware, a software module executable by a processor, or a combination thereof. The software module may be located in a Random Access Memory (RAM), an internal memory, a Read Only Memory (ROM), an Electrically Programmable ROM, an Electrically-Erasable Programmable ROM, a register, a hard disk, a removable disk drive, a CD-ROM, or any other storage medium known in the art.

Finally, it should also be noted that in the present disclosure, relational terms such as first and second are only used to distinguish one entity or operation from another, and do not necessarily require or imply that any such actual relationship or order exists in these entities or operations. Furthermore, the term "comprise", "include" or any other variation thereof is intended to cover a non-exclusive inclusion, so that a process, a method, an article, or a device including a set of elements includes not only those elements, but also other elements not expressly listed or elements inherent in such a process, method, article, or device. Unless expressively limited, the statement "including a..." does not exclude the case that other similar elements may exist in the process, method, article or device including the series of elements.

The technical solutions provided in the present disclosure are described above in detail. Although the principles and implementations of the present disclosure are described by using specific examples in the present disclosure, the descriptions of the foregoing embodiments are merely intended to help understand the method and the core concept of the method of the present disclosure. In addition, a person of ordinary skill in the art may make modifications to the specific implementations and application range according to the concept of the present disclosure. In conclusion, the content of this specification is not to be construed as a limit on the present disclosure.

## Claims

1. A system for tracing and managing a carbon footprint of a supply chain, comprising:

    a data source access and management module, configured to access and manage a plurality of data sources corresponding to the supply chain and obtain activity data corresponding to the data sources, wherein the activity data comprises online data and offline data;
    a carbon footprint calculation module, configured to, in response to a carbon footprint calculation request from a data source of the plurality of data sources, perform a life cycle impact assessment based on obtained target activity data and an obtained target emission factor corresponding to the data source to obtain a carbon footprint calculation result corresponding to the data source;
    a blockchain storage module, configured to perform blockchain storage based on a determined data protection level and determined data authority information in performing data storage;
    a reporting and authentication module, configured to obtain a carbon footprint electronic report based on the target activity data, the target emission factor and the carbon footprint calculation result, and submit the carbon footprint electronic report to a third-party institution for review, wherein the third-party institution uploads a carbon footprint certificate to a preset blockchain after approving the carbon footprint electronic report; and
    a data query and tracing module, configured to perform processing in response to a received a data query request, and perform query based on a processing result and the preset blockchain to obtain a query result;
    wherein the carbon footprint calculation module comprises:

        a request analysis unit, configured to analysis the carbon footprint calculation request to obtain an analysis result, wherein the analysis result comprises a target data request item, a target data time period, and company identification information;
        a target activity data obtaining unit, configured to determine, based on the target data request item and the target data time period, whether a data model for storing the activity data exists in the preset blockchain in a corresponding time period, and obtain the target activity data based on the data model in a case that the data model for storing the activity data exists in the preset blockchain in the corresponding time period; and
a target emission factor obtaining unit, configured to determine, based on the company identification information, whether a historical carbon footprint calculation result of a target data source or a upstream data source or a downstream data source of the supply chain exists in the preset blockchain, determine whether the target data source has a data usage authority to obtain a first authority verification result in a case that the historical carbon footprint calculation result exists, and obtain the target emission factor based on the obtained first authority verification result, wherein the target data source is the data source that initiates the carbon footprint calculation request;
wherein the target emission factor obtaining unit comprises:

    a first emission factor obtaining sub-unit, configured to obtain the target emission factor based on the historical carbon footprint calculation result in a case that it is determined that the historical carbon footprint calculation result exists and the first authority verification result indicates that the target data source has the data usage authority; and
    a second emission factor obtaining sub-unit, configured to perform retrieval matching based on a preset background database and obtain the target emission factor based on a retrieval matching result in a case that it is determined that the historical carbon footprint calculation result does not exist or the first authority verification result indicates that the target data source does not have the data usage authority.

2. The system for tracing and managing a carbon footprint of a supply chain according to claim 1, wherein the data source access and management module comprises:

    an online data obtaining unit, configured to obtain online data corresponding to the data source by using a configured preset data collection device, wherein the online data comprises an electricity usage change, a gas usage, a water usage change, and new energy generation data; and

an offline data obtaining unit, configured to obtain offline data from offline data sources corresponding to the plurality of data sources, wherein the offline data sources comprise a bill of materials, a company resource planning system, an accounting system, a workshop production statistics table, and a warehouse-in and warehouse-out ledger.

3. The system for tracing and managing a carbon footprint of a supply chain according to claim 1, wherein the target activity data obtaining unit further comprises:

a request modification sub-unit, configured to return an error information response to the data source in a case that it is determined that no data model for storing the activity data exists in the preset blockchain in the corresponding time period, wherein the data source modifies the carbon footprint calculation request based on the error information response; or

a data supplementation sub-unit, configured to trigger an activity data supplement operation in a case that it is determined that no data model for storing the activity data exists in the preset blockchain in the corresponding time period.

4. The system for tracing and managing a carbon footprint of a supply chain according to claim 1, wherein the reporting and authentication module comprises: a third-party review unit, configured to submit the target activity data, the target emission factor, and the carbon footprint electronic report to the third-party institution, wherein the third-party institution, together with the data query and tracing module, performs data source tracing and data change history tracing to perform the review.

5. The system for tracing and managing a carbon footprint of a supply chain according to any one of claims 1 to 4, wherein the data query and tracing module comprises:

a request classification unit, configured to classify the data query request to obtain a classification result;

an authority verification unit, configured to determine whether a request initiator of the data query request has a corresponding data access authority based on the classification result to obtain a second authority verification result; and

a data query unit, configured to perform query based on the classification result and the preset blockchain to obtain the query result in a case that the second authority verification result indicates that the request initiator of the data query request has the corresponding data access authority.

6. A method for tracing and managing a carbon footprint of a supply chain, comprising:

accessing and managing a plurality of data sources corresponding to the supply chain, and obtaining activity data corresponding to the data sources, wherein the activity data comprises online data and offline data;

performing a life cycle impact assessment, in response to a carbon footprint calculation request from a data source of the plurality of data sources, based on obtained target activity data and an obtained target emission factor corresponding to the data source to obtain a carbon footprint calculation result corresponding to the data source;

performing blockchain storage based on a determined data protection level and determined data authority information in performing data storage;

obtaining a carbon footprint electronic report based on the target activity data, the target emission factor and the carbon footprint calculation result, and submitting the carbon footprint electronic report to a third-party institution for review, wherein the third-party institution uploads a carbon footprint certificate to a preset blockchain after approving the carbon footprint electronic report; and

performing processing in response to a received a data query request, and performing query based on a processing result and the preset blockchain to obtain a query result;

wherein the performing a life cycle impact assessment, in response to a carbon footprint calculation request from a data source of the plurality of data sources, based on obtained target activity data and an obtained target emission factor corresponding to the data source to obtain a carbon footprint calculation result corresponding to the data source comprises:

analyzing the carbon footprint calculation request to obtain an analysis result, wherein the analysis result comprises a target data request item, a target data time period, and company identification information;

determining, based on the target data request item and the target data time period, whether a data model for storing the activity data exists in the preset blockchain in a corresponding time period, and obtaining the target activity data based on the data model in a case that the data model for storing the activity data exists in the preset blockchain in the corresponding time period; and

determining, based on the company identification information, whether a historical carbon footprint calculation result of a target data source or a upstream data source or a downstream data source of the supply chain exists in the preset blockchain, determining whether the target data source has a data usage authority to obtain a first authority verification result in a case that the historical carbon footprint calculation result exists, and obtaining the target emission factor based on the obtained first authority verification result, wherein the target data source is the data source that initiates the carbon footprint calculation request;

wherein the determining, based on the company identification information, whether a historical carbon footprint calculation result of a target data source or a upstream data source or a downstream data source of the supply chain exists in the preset blockchain, determining whether the target data source has a data usage authority to obtain a first authority verification result in a case that the historical carbon footprint calculation result exists, and obtaining the target emission factor based on the obtained first authority verification result comprises:

obtaining the target emission factor based on the historical carbon footprint calculation result in a case that it is determined that the historical carbon footprint calculation result exists and the first authority verification result indicates that the target data source has the data usage authority; and performing retrieval matching based on a preset background database and obtain the target emission factor based on a retrieval matching result in a case that it is determined that the historical carbon footprint calculation result does not exist or the first authority verification result indicates that the target data source does not have the data usage authority.

7. An electronic device, comprising:

a memory, storing a computer program; and
a processor, wherein
the processor is configured to execute the computer program to perform the method for tracing and managing a carbon footprint of a supply chain according to claim 6.

8. A computer-readable storage medium, storing a computer program, wherein the computer program, when executed by a processor, causes the processor to perform the method for tracing and managing a carbon footprint of a supply chain according to claim 6.

Data source access and management module 11

Carbon footprint calculation module 12

Blockchain storage module 13

Reporting and authentication module 14

Data query and tracing module 15

**FIG. 1**

**FIG. 2**

EP 4 641 421 A1

| Field | Filed information | Data example |
|---|---|---|
| Item name | Data item name | water consumption, electricity consumption |
| Amount | Amount | |
| Unit | Statistical unit | Cubic meter m3, Kilowatt hour kWh |
| Start time | Start time of data model | 2023-01-01 |
| End time | End time of data model | 2024-01-01 |
| Company uuid | Identifier of company to which data belongs | |

**FIG. 3**

```
                    ┌─────────────────┐
                    │ Start calculation│
                    └─────────────────┘
                             │
                             ▼
                    ┌─────────────────┐
                    │   Obtain data   │
                    └─────────────────┘
                             │
          ┌──────────────────┴──────────────────┐
          ▼                                      ▼
  ┌─────────────────┐                  ┌─────────────────┐
  │ Request activity│                  │  Request factor │
  │      data       │                  │       data      │
  └─────────────────┘                  └─────────────────┘
          │                                      │
          ▼                                      ▼
     ╱─────────╲                          ╱───────────────╲              ┌──────────────┐
    ╱    Data   ╲                        ╱  Authentication  ╲    N        │  Background   │
 N ╱ verification ╲                     ╱ and data verification╲─────────▶│   database    │
    ╲            ╱                        ╲                   ╱            └──────────────┘
     ╲─────────╱                          ╲───────────────╱
          │ Y                                    │ Y
          ▼                                      ▼
  ┌─────────────────┐                  ┌─────────────────┐
  │  Activity data  │                  │   Factor data   │◀──────────────────────
  └─────────────────┘                  └─────────────────┘
          │                                      │
          └──────────────────┬──────────────────┘
                             ▼
                    ┌─────────────────┐
                    │ LCA calculation │
                    └─────────────────┘
```

**FIG. 4**

Data source access and management module — 21

Carbon footprint calculation module — 22

Blockchain storage module — 23

Reporting and authentication module — 24

Request classification unit — 25

Authority verification unit — 26

Data query unit — 27

**FIG. 5**

Access and manage multiple data sources corresponding to the supply chain, and obtain activity data corresponding to the data sources, where the activity data includes online data and offline data ⟋⎯ S11

Perform a life cycle impact assessment, in response to a carbon footprint calculation request from a data source of the multiple data sources, based on obtained target activity data and an obtained target emission factor corresponding to the data source to obtain a carbon footprint calculation result corresponding to the data source ⟋⎯ S12

Perform blockchain storage based on a determined data protection level and determined data authority information in performing data storage ⟋⎯ S13

Obtain a carbon footprint electronic report based on the target activity data, the target emission factor and the carbon footprint calculation result, and submit the carbon footprint electronic report to a third-party institution for review, where the third-party institution uploads a carbon footprint certificate to a preset blockchain after approving the carbon footprint electronic report ⟋⎯ S14

Perform processing in response to a received a data query request, and perform query based on a processing result and the preset blockchain to obtain a query result ⟋⎯ S15

**FIG. 6**

30

Electronic device

Memory 32

Operating system 321

Computer program 322

Processor 31

Communication bus 36

Power supply 33

Communication interface 34

Input/output interface 35

**FIG. 7**

Europäisches
Patentamt

European
Patent Office

Office européen
des brevets

# EUROPEAN SEARCH REPORT

**Application Number**

EP 24 22 2236

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/394507 A1 (GIROTI SUDHIR KUMAR [US]) 7 December 2023 (2023-12-07) <br> * paragraph [0002] - paragraph [0003]; figures 2,3 * <br> * paragraph [0029] * <br> * paragraph [0043] * <br> * paragraph [0051] * <br> * paragraph [0058] - paragraph [0059] * <br> * paragraph [0064] - paragraph [0065] * <br> * paragraph [0071] - paragraph [0074] * <br> * paragraph [0139] - paragraph [0140] * <br> * paragraph [0170] * <br> - - - - - | 1-8 | INV. <br> G06F21/62 <br> G06Q30/018 <br> G06Q50/26 |
| A | WO 2022/225446 A1 (ASIA GREEN FUND MAN LIMITED [GB] ET AL.) 27 October 2022 (2022-10-27) <br> * paragraph [0013] - paragraph [0041]; figures 1,2 * <br> - - - - - | 1-8 | |
| A | WO 2024/060244 A1 (SIEMENS AG [DE]; SIEMENS LTD CHINA [CN]) 28 March 2024 (2024-03-28) <br> * the whole document * <br> - - - - - | 1-8 | TECHNICAL FIELDS SEARCHED (IPC) <br> G06F <br> G06Q |

The present search report has been drawn up for all claims

| Place of search | Date of completion of the search | Examiner |
|---|---|---|
| Munich | 6 June 2025 | Koblitz, Birger |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ...................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 22 2236

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2025

| Patent document cited in search report | Publication date | Patent family member(s) | Publication date |
|---|---|---|---|
| US 2023394507 A1 | 07-12-2023 | NONE | |
| WO 2022225446 A1 | 27-10-2022 | CN 115239487 A | 25-10-2022 |
| | | TW 202407626 A | 16-02-2024 |
| | | US 2024193684 A1 | 13-06-2024 |
| | | US 2025086710 A1 | 13-03-2025 |
| | | WO 2022225446 A1 | 27-10-2022 |
| | | WO 2022225464 A1 | 27-10-2022 |
| WO 2024060244 A1 | 28-03-2024 | CN 119768815 A | 04-04-2025 |
| | | EP 4565958 A1 | 11-06-2025 |
| | | WO 2024060244 A1 | 28-03-2024 |

EPO FORM P0459

For more details about this annex : see Official Journal of the European Patent Office, No. 12/82